# EUROPEAN PATENT SPECIFICATION

(11) **EP 0 848 143 B1**
(45) Date of publication and mention of the grant of the patent: **02.05.2003**
(21) Application number: 96120111.8
(22) Date of filing: 13.12.1996
(51) Int. Cl.: F01N 7/08, F16L 27/111, F16L 51/02

(54) **Flexible decoupling joint, particularly for vehicle exhaust pipes**
Flexible Entkopplungsverbindung, insbesondere für Kraftfahrzeugabgasleitungen
Joint de découplage flexible, en particulier pour tuyau d'échappement de véhicule

(43) Date of publication of application: 17.06.1998
(73) Proprietor: FLEXIDER S.r.l., 10156 Torino (IT)
(72) Inventor: Capra, Gian Luigi, 10100 Torino (IT)
(74) Representative: Plebani, Rinaldo

(56) References cited:
- EP-A- 0 657 683
- US-A- 2 771 311
- US-A- 2 934 095
- PATENT ABSTRACTS OF JAPAN vol. 015, no. 290 (M-1139), 23 July 1991 & JP 03 105012 A (SANGO:KK), 1 May 1991,

## Description

The present invention relates to a flexible, vibration-damping decoupling joint for connecting pipe portions in fluidtight, mechanically "decoupled" manner, and which, in particular, is fittable to an exhaust system pipe of an internal combustion engine vehicle to connect the final pipe portion of the exhaust manifold of the engine to the inlet pipe portion of the catalyst.

Here and hereinafter, the term "mechanical decoupling" is intended to mean the ability of the joint to connect two end-to-end pipe portions without transmitting any noticeable vibration between them, and in particular the ability to protect the catalyst against vibration of the engine while at the same time permitting relative axial and torsional movement of the connected pipe portions, e.g. as a result of differing thermal expansion.

The state of the art is familiar with numerous types of flexible joints for connecting two portions of a vehicle exhaust pipe in gastight manner. The joint may, for example (see e.g. US-A-4,659,117), comprise a flexible undulated sleeve for connecting the pipe portions in fluidtight manner; and supporting parts fittable to the ends of the pipe portions for connection, and which fit on to each other to form box type pockets housing vibration-damping pads made of compressed wire and known as "wire meshes".

In a simplified, cheaper, more compact version of the above joint (see e.g. US-A-2,771,311), the supporting parts are in the form of straightforward annular endpieces, which are connected to each other, via the wire meshes, by a substantially rigid sleeve fitted radially outwards and independently of both the endpieces and the bellows sleeve; and the wire meshes are retained in position by respective double axial shoulders on the endpieces and each end of the connecting sleeve.

A drawback of both the above embodiments is the noise caused by high-frequency vibration generated, in use, in the flexible bellows sleeve by the passage of the exhaust gas. To reduce such vibration and "protect" the fluid stream, the joints may be fitted internally with a flow guide element (see US-A-4,659,117) fitted concentrically inside the flexible bellows and projecting axially from one of the supporting parts towards the other. Besides failing to provide a satisfactory solution to the problem, the flow guide element results in undesired choking of the exhaust gas passage, thus increasing the counterpressure at the exhaust and so reducing the power of the engine.

It is an object of the present invention to provide a decoupling joint of the aforementioned type, which provides for a low noise level combined with low load losses.

According to the present invention, there is provided a decoupling joint as defined in claim 1.

More specifically, supporting parts of the joint are defined by respective annular endpieces; and a flow guide sleeve is defined by a braided wire sheath having an inside diameter just slightly smaller than the inside diameter of the endpieces, and a negligible radial thickness in relation to the diameter, and retained by gripping opposite ends between respective inner lateral wall portions of the respective endpieces and corresponding respective retaining rings housed inside the ends of the flow guide sleeve.

Using a flow guide element in the form of a thin braided wire sheath - identical to those commonly used for protecting the flexible sleeve of flexible exhaust pipe joints - has surprisingly enabled - for a given flow, speed and temperature of the exhaust gas through the joint - a drastic reduction in noise level as compared with similar joints having no flow guide element, or featuring a conventional element comprising a projecting pipe portion inside the bellows sleeve. Moreover, as compared with the latter known solution, the flow guide element according to the invention provides for minimum load losses through the joint, in that, since the diameter of the sheath is such as not to touch the undulations of the bellows, and the thickness of the sheath is only slightly more than twice the diameter of the wire from which it is made, the reduction in the diameter of the exhaust gas passage is minimum (1-5 mm) and - at least as regards the dynamics of the exhaust gas - negligible in relation to the inside diameter of the endpieces.

A non-limiting embodiment of the present invention will be described by way of example with reference to the accompanying drawings, in which:
Figure 1 shows a half-sectioned longitudinal view of a decoupling joint in accordance with the present invention;
Figure 2 shows a larger-scale detail of an endpiece in Figure 1.

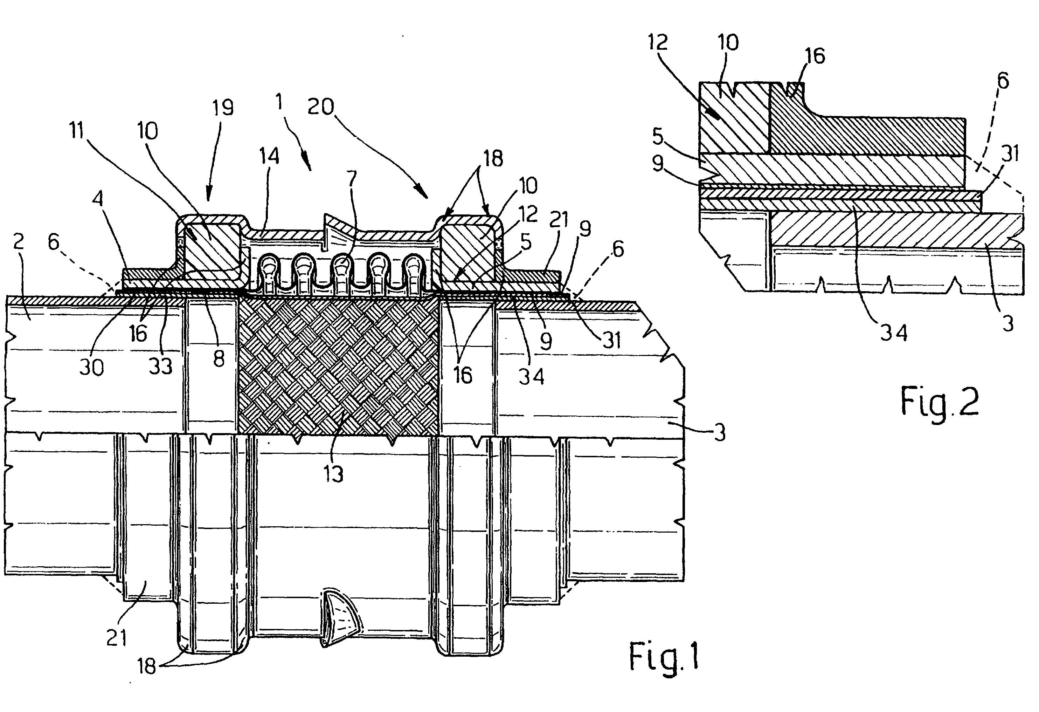

Number 1 in Figures 1 and 2 indicates a flexible, vibration-damping decoupling joint for connecting, in fluidtight and mechanically "decoupled" manner, opposite pipe portions 2 and 3, in particular forming part of a known exhaust system (not shown) of a vehicle equipped with a known internal combustion engine (not shown for the sake of simplicity). By way of example, pipe 1 may be fitted in series along said exhaust system for connecting the final pipe portion 2 of the exhaust manifold of the engine (not shown) to the inlet pipe portion 3 of the catalyst (not shown).

Joint 1 comprises a pair of supporting parts fittable to pipe portions 2 and 3 and comprising, in the example shown, respective opposite annular endpieces 4 and 5 fittable, in use, in fluidtight manner to the ends of pipe portions 2 and 3 respectively, e.g. by means of continuous weld beads 6; and an elastically deformable, metal bellows sleeve 7 for connecting, in use, pipe portions 2, 3 in fluidtight manner, and for this purpose connected integrally, as will be seen, to annular endpieces 4 and 5 at opposite ends 8 and 9 in the form of flat cylindrical sleeves.

Joint 1 also comprises annular pads 10 - so-called "wire meshes" - made of compressed wire and housed inside respective box type pockets 11 and 12 formed at least partially by endpieces 4, 5; a flow guide element 13; and a second substantially rigid metal sleeve 14 fitted radially outwards of bellows sleeve 7 and endpieces 4, 5, extending axially over endpieces 4, 5 at each end, and defining the mechanically supporting portion of joint 1 and a means of connecting endpieces 4, 5, to each of which it is connected (as will be seen) solely by means of a respective pad 10.

In the example shown, each pad 10 is gripped axially and radially inside respective pocket 11, 12; and each pocket 11, 12 is defined by the outer lateral wall of respective endpiece 4, 5, by a pair of first axial shoulders 16 facing each other and formed on respective endpiece 4, 5, by the inner lateral wall of sleeve 14, and by a second pair of axial shoulders 18 facing each other and formed at respective end 19, 20. As shown, shoulders 18 are formed by bending ends 19, 20 into a downward-facing C; and shoulders 16 are defined by respective L-bent edges of respective coaxial sleeves 21 fitted externally to endpieces 4, 5, and by respective facing end edges of endpieces 4, 5.

According to the present invention, flow guide element 13 is defined by a flexible cylindrical metal sleeve comprising a deformable, flexible sheath made of braided wire and connected integrally, at opposite ends 30 and 31, to respective inner lateral walls of endpieces 4, 5. More specifically, braided wire sheath 13 is identical to known protective sheaths commonly used on flexible joints and fitted outside bellows sleeve 7. Unlike known applications, however, sheath 13, according to the present invention, is located inside bellows sleeve 7.

Braided sheath 13 has a diameter equal to or only slightly (1-5 mm) smaller than the inside diameter of endpieces 4, 5, so as not to touch the inside of the undulations of bellows sleeve 7, and a radial thickness equal to or only slightly more than twice (due to the braiding) the diameter of the wire from which sheath 13 is made. As such, the reduction in the section of the exhaust gas passage due to the presence of sheath 13 is negligible - at least as regards the dynamics of the exhaust gas - in relation to the diameter of the joint. In the example shown, sheath 13 is retained by gripping opposite ends 30, 31 between respective inner lateral wall portions of respective endpieces 4, 5 and corresponding respective retaining rings 33, 34 housed inside the ends of sheath 13. Ends 8, 9 of bellows sleeve 7 are also gripped against said inner lateral wall portions of respective endpieces 4, 5 - in the example shown, between said inner lateral wall portions and respective ends 30, 31 of braided sheath 13 - by means of the same respective retaining rings 33, 34.

### EXAMPLE

Comparative noise tests were conducted of joint 1 as described above and an identical joint of the same size and comprising the same components, except for braided inner sheath 13, for which was substituted a conventional flow guide element (liner) comprising a small-diameter pipe portion projecting inside sleeve 7.

The joints were connected to the exhaust system of the same engine on a test bench, and noise tested using a sound-level meter at a distance of 1 cm from the joint, and maintaining the engine at a speed of 4500 to 5500 rpm. Whereas the noise level of the known joint without braided inner sheath 13 never fell below 110 dBA, that of the joint according to the invention, and all other conditions being the same, never rose above 104 dBA. Moreover, the joint according to the invention also showed a net improvement in output of the engine.

## Claims

1. A decoupling joint (1) of the type comprising opposite supporting parts (4, 5) fittable to respective opposite pipe portions (2, 3) for connection; a first elastically deformable, metal bellows sleeve (7) for connecting, in use, said pipe portions in fluidtight manner, and which is connected integrally at each end to said supporting parts (4, 5); respective annular pads (10) of compressed wire housed inside box type pockets (11, 12); connecting means (14) for connecting said supporting parts, said connecting means being located outside the bellows sleeve and being connected to the supporting parts via said respective annular pads; and a flow guide sleeve (13) housed inside said bellows sleeve (7); the joint being **characterized in that** said supporting parts comprise respective annular endpieces (4, 5) which are connected end-to-end and in fluidtight manner to respective facing ends of said pipe portions (2, 3) and define at least partially said box type pockets (11, 12); and **in that** said flow guide sleeve (13) comprises a deformable, flexible sheath made of braided wire which has a diameter just slightly smaller than that of the endpieces (4, 5); said flow guide sleeve (13) defined by said braided wire sheath being connected integrally at opposite ends (30, 31) to respective inner lateral walls of said annular endpieces (4, 5) and being retained by gripping, in use, said opposite ends (30, 31) between respective inner lateral wall portions of the respective endpieces (4, 5) and corresponding respective outer lateral surfaces of said pipe portions (2, 3).

2. A joint as claimed in Claim 1, **characterized in that** said connecting means for connecting the supporting parts comprise a second metal sleeve (14), located radially outwards of the bellows sleeve (7) and the endpieces (4, 5) and extending axially over the endpieces (4, 5); said second sleeve (14) being connected to each endpiece (4, 5) solely by means of a respective said annular pad (10) of compressed wire, which is gripped inside a respective box type pocket (11, 12) formed by a pair of first axial shoulders (16) facing each other and formed on the respective said endpiece (4, 5), and by a second pair of axial shoulders (18) facing each other and formed on a respective end (19, 20) of the second sleeve (14).

3. A joint as claimed in Claim 2, **characterized in that** said flow guide sleeve (13) defined by said braided wire sheath has a radial thickness equal to or just slightly greater than twice the diameter of a wire from which the sheath is made, and is retained by gripping opposite ends (30, 31) between respective inner lateral wall portions of the respective endpieces (4, 5) and corresponding respective retaining rings (33, 34) housed inside the ends of the flow guide sleeve (13).

4. A joint as claimed in Claim 3, **characterized in that** said bellows sleeve (7) comprises two opposite cylindrical ends (8, 9) gripped against said inner lateral wall portions of the respective endpieces (4, 5), and gripped between said inner lateral wall portions and said ends (30, 31) of the flow guide sleeve (13) by means of said retaining rings (33, 34).

## Patentansprüche

1. Entkopplungs-Verbindung (1) des Typs, welcher gegenüberliegende tragende Teile (4, 5) umfasst, die in jeweilige gegenüberliegende Röhrenabschnitte (2, 3) zur Verbindung einpassbar sind; eine erste elastisch deformierbare Balg-Metallmuffe (7) zum Verbinden der Röhrenabschnitte in einer fluiddichten Weise beim Gebrauch, und welche integral an jedem Ende mit tragenden Teilen (4, 5) verbunden ist; jeweilige ringförmige Kissen (10) aus komprimiertem Draht, die im Inneren von kastenartigen Taschen (11, 12) untergebracht sind; eine Verbindungseinrichtung (14) zum Verbinden der tragenden Teile, wobei die Verbindungseinrichtung außerhalb der Balgmuffe platziert ist und mit den tragenden Teilen über die jeweiligen ringförmigen Kissen verbunden ist; und eine Strömungsführungs-Muffe (13), die im Inneren der Balgmuffe (7) untergebracht ist; wobei die Verbindung **dadurch gekennzeichnet ist, dass** die tragenden Teile jeweilige ringförmige Endstücke (4, 5) umfassen, welche Ende an Ende und in einer fluiddichten Weise mit jeweiligen stirnseitigen Enden der Röhrenabschnitte (2, 3) verbunden sind und zumindest teilweise die kastenartigen Taschen (11, 12) definieren; und dass die Strömungsführungs-Muffe (13) eine deformierbare flexible Hülle umfasst, die aus geflochtenem Draht hergestellt ist, welche einen Durchmesser aufweist, der gerade etwas kleiner ist, als derjenige der Endstücke (4, 5); wobei die Strömungsführungs-Muffe (13), die durch die Hülle aus geflochtenem Draht definiert wird, integral an gegenüberliegenden Enden (30, 31) mit jeweiligen inneren lateralen Wänden der ringförmigen Endstücke (4, 5) verbunden ist, und im Gebrauch durch Greifen der gegenüberliegenden Enden (30, 31) zwischen jeweiligen inneren lateralen Wandabschnitten der jeweiligen Endstücke (4, 5) und entsprechenden jeweiligen äußeren lateralen Oberflächen der Röhrenabschnitte (2, 3) gehalten wird.

2. Verbindung wie in Anspruch 1 beansprucht, **dadurch gekennzeichnet, dass** die Verbindungseinrichtung zum Verbinden der tragenden Teile eine zweite Metallmuffe (14) umfasst, die radial nach außen von der Balgmuffe (7) und den Endstücken (4, 5) platziert ist und sich axial über die Endstükke (4, 5) erstreckt; wobei die zweite Muffe (14) mit jedem Endstück (4, 5) lediglich mittels eines jeweiligen ringförmigen Kissens (10) aus komprimiertem Draht verbunden ist, welches im Inneren einer jeweiligen kastenartigen Tasche (11, 12) gegriffen wird, die durch ein Paar von ersten axialen Schultern (16) gebildet ist, die sich gegenüberliegen und auf dem jeweiligen Endstück (4, 5) gebildet sind und durch ein zweites Paar von axialen Schultern (18), die sich gegenüberliegen und auf einem jeweiligen Ende (19, 20) der zweiten Muffe (14) gebildet sind.

3. Verbindung wie in Anspruch 2 beansprucht, **dadurch gekennzeichnet, dass** die Strömungsführungs-Muffe (13), die durch die geflochtene Drahthülle definiert wird, eine radiale Dicke aufweist, die gleich oder gerade etwas größer als der doppelte Durchmesser eines Drahtes ist, aus welchem die Hülle hergestellt ist, und durch Greifen gegenüberliegender Enden (30, 31) zwischen jeweiligen inneren lateralen Wandabschnitten der jeweiligen Endstücke (4, 5) und entsprechenden jeweiligen Sprengringen (33, 34), die im Inneren der Enden der Strömungsführungs-Muffe (13) untergebracht sind, gehalten wird.

4. Verbindung wie in Anspruch 3 beansprucht, **dadurch gekennzeichnet, dass** die Balgmuffe (7) zwei gegenüberliegende zylindrische Enden (8, 9) umfasst, die gegen die inneren lateralen Wandabschnitte der jeweiligen Endstücke (4, 5) greifen, und zwischen den inneren lateralen Wandabschnitten der Enden (30, 31) der Strömungsführungs-Muffe (13) mittels der Sprengringe (33, 34) gegriffen werden.

## Revendications

1. Joint de découplage (1) du type comprenant des parties de support (4, 5) opposées pouvant s'ajuster sur des régions tubulaires opposées (2, 3), en vue d'un raccordement ; une première douille (7) à soufflet métallique qui est destinée à assurer, en service, une solidarisation desdites régions tubulaires d'une manière étanche aux fluides, et est reliée d'une seule pièce auxdites parties de support (4, 5), à chaque extrémité ; des cales annulaires respectives (10) en un fil métallique comprimé, logées à l'intérieur de poches (11, 12) du type caisson ; des moyens de raccordement (14) pour raccorder lesdites parties de support, lesdits moyens de raccordement étant situés à l'extérieur de la douille à soufflet, et étant reliés aux parties de support par l'intermédiaire desdites cales annulaires respectives ; et une douille (13) de guidage de l'écoulement, logée à l'intérieur de ladite douille (7) à soufflet ; ledit joint étant **caractérisé par le fait que** lesdites parties de support comprennent des pièces extrêmes annulaires respectives (4, 5) qui sont reliées bout à bout, de manière étanche aux fluides, à des extrémités frontales respectives desdites régions tubulaires (2, 3), et définissent au moins partiellement lesdites poches (11, 12) du type caisson ; et **par le fait que** ladite douille (13) de guidage de l'écoulement comprend une gaine flexible déformable constituée d'un fil métallique tressé, qui présente un diamètre à peine légèrement inférieur à celui des pièces extrêmes (4, 5) ; ladite douille (13) de guidage de l'écoulement, définie par ladite gaine en fil métallique tressé, étant reliée d'un seul tenant, par des extrémités opposées (30, 31), à des parois latérales intérieures desdites pièces extrêmes annulaires (4, 5), et étant retenue, en sérvice, par enserrement desdites extrémités opposées (30, 31) entre des zones respectives de paroi latérale intérieure des pièces extrêmes respectives (4, 5), et des surfaces latérales extérieures respectives correspondantes desdites régions tubulaires (2, 3).

2. Joint selon la revendication 1, **caractérisé par le fait que** lesdits moyens de raccordement, conçus pour raccorder les parties de support, comprennent une seconde douille métallique (14) située radialement à l'extérieur de la douille (7) à soufflet et des pièces extrêmes (4, 5), et s'étendant axialement au-dessus desdites pièces extrêmes (4, 5) ; ladite seconde douille (14) étant reliée à chaque pièce extrême (4, 5) uniquement au moyen d'une cale annulaire respective (10) du type précité, consistant en du fil métallique comprimé, qui est coincée à l'intérieur d'une poche respective (11, 12) du type caisson, formée par une paire de premiers épaulements axiaux (16) se faisant mutuellement face et ménagés sur ladite pièce extrême respective (4, 5), et par une seconde paire d'épaulements axiaux (18) se faisant mutuellement face et façonnés sur une extrémité respective (19, 20) de la seconde douille (14).

3. Joint selon la revendication 2, **caractérisé par le fait que** ladite douille (13) de guidage de l'écoulement, définie par ladite gaine en fil métallique tressé, possède une épaisseur radiale égale ou à peine légèrement supérieure au double du diamètre d'un fil métallique dont la gaine est constituée, et est retenue par enserrement d'extrémités opposées (30, 31) entre des zones respectives de paroi latérale intérieure des pièces extrêmes respectives (4, 5), et des bagues respectives de retenue (33, 34) correspondantes, logées à l'intérieur des extrémités de la douille (13) de guidage de l'écoulement.

4. Joint selon la revendication 3, **caractérisé par le fait que** ladite douille (7) à soufflet comprend deux extrémités cylindriques opposées (8, 9) coincées contre lesdites zones de paroi latérale intérieure des pièces extrêmes respectives (4, 5), et enserrées, au moyen desdites bagues de retenue (33, 34), entre lesdites zones de paroi latérale intérieure et lesdites extrémités (30, 31) de la douille (13) de guidage de l'écoulement.
